# EUROPÄISCHE PATENTSCHRIFT

(11) **EP 1 851 402 B1**
(45) Veröffentlichungstag und Bekanntmachung des Hinweises auf die Patenterteilung: **28.04.2010**
(21) Anmeldenummer: 06704543.5
(22) Anmeldetag: 13.02.2006
(51) Int. Cl.: E04H 12/22, F16B 25/10, B23B 51/02

(54) **PFOSTENANKER UND MIT DIESEM VERSEHENER PFOSTEN**
POST ANCHOR AND POST COMPRISING THE SAME
TIGE D'ANCRAGE DE BLOC SUPPORT ET BLOC SUPPORT DOTÉ DE CETTE TIGE D'ANCRAGE

(30) Priorität: 22.02.2005 CH 305052005
(43) Veröffentlichungstag der Anmeldung: 07.11.2007
(73) Patentinhaber: Ed Geistlich Söhne AG Für Chemische Industrie, 8952 Schlieren (CH)
(72) Erfinder: FANKHAUSER, Urs, CH-9500 Wil (CH); BERTOLA, Bruno, CH-8004 Zürich (CH)
(74) Vertreter: Liebetanz, Michael
(86) Internationale Anmeldenummer: PCT/CH2006/000092
(87) Internationale Veröffentlichungsnummer: WO 2006/089441

(56) Entgegenhaltungen:
- EP-A- 0 893 185
- EP-A- 1 132 548
- WO-A-2004/048718
- DE-U1-202004 013 483
- US-A- 930 607

## Beschreibung

Die Erfindung betrifft einen Pfostenanker bzw. einen Pfosten mit den Merkmalen des Oberbegriffs des Anspruchs 7 bzw. 1, sowie ein Verfahren zur Eintragung eines sokhen Pfostenankers in einen solchen Pfosten.

Ein Pfostenanker ist aus der DE 36 34 266 bekannt. Dort wird eine einschraubbare Gewindestange in einem entsprechenden Bohrloch eines Pfostens verklebt, wobei auf der Gewindestange eine Längsnut vorgesehen ist, um den Leim entsprechend in das Bohrloch zwischen Gewindestange und Bohrlochwand eintreten zu lassen.

Ein anderer Pfostenanker ist aus der DE 199 12 815 bekannt, bei dem an einer Platte, die gegen die Unterseite eines Pfostens legbar ist, ein Gewindedorn vorgesehen ist, der bei der Positionierung des Pfostenankers in den Pfosten eindringt. Auf der gegenüberliegenden Seite des Pfostenankers ist eine Muffe mit Innengewinde vorgesehen, so dass aussenseitig des Pfostens ein Ankerstab nachträglich eingeschraubt werden kann.

Bei allen Vorschlägen des Standes der Technik, auch bei eingeleimten Gewindestangen, besteht die Problematik der Parallelität von Pfostenanker und Pfosten. Dies bedeutet, dass der Pfostenanker mit seiner Mittelachse zumeist nicht genau parallel zur Längsachse des Pfostens liegt. Dies ist eine unerwünschte Eigenschaft eines solchen Systems und ein Nachteil beim Zusammenbau solcher Pfostenankersysteme auf Baustellen.

In der Praxis wird daher nicht wie bei der DE 199 12 815 die Einheit Gewindestange und Pfosten erst auf der Baustelle zusammengesetzt, sondern dies geschieht vorab, um die besagte Parallelität unter industriellen Fertigungsgegebenheiten möglichst gut erreichen zu können.

Ferner lässt beispielsweise bei der Verbindung von Metallankern in Holzpfosten die Auszugskraft der Anker meist zu wünschen übrig.

Ausgehend von diesen Dokumenten liegt der Erfindung die Aufgabe zugrunde, einen Pfostenanker anzugeben, der eine höhere Auszugskraft bei besserer Parallelität aufweist und bei dem die Fixierung zudem verdrehsicherer ist.

Das Dokument WO 2004/048718 A weist einen Pfostenanker bzw. einen Pfosten mit den Merkmalen des Oberbegriffs des Anspruchs 7 bzw. 1 auf. Der Erfindung liegt die Aufgabe zugrunde, den Bohrerabschnitt eines Pfostenankers dieser Art als Lastenaufnahme werken zu lassen.......Merkmale des Anspruchs 7 bzw. 1 gelöst.

Diese Aufgabe wird erfindungsgemäss für einen Pfostenanker bzw. einen Pfosten dieser Art mit den Merkmalen des kennzeichnenden Teils des Merkmals des Anspruch 7 bzw. 1 gelöst.

Ein Verfahren zum Einbringen eines erfindungsgemässen Pfostenankers in einen Pfosten ist in Anspruch 9 beschrieben.

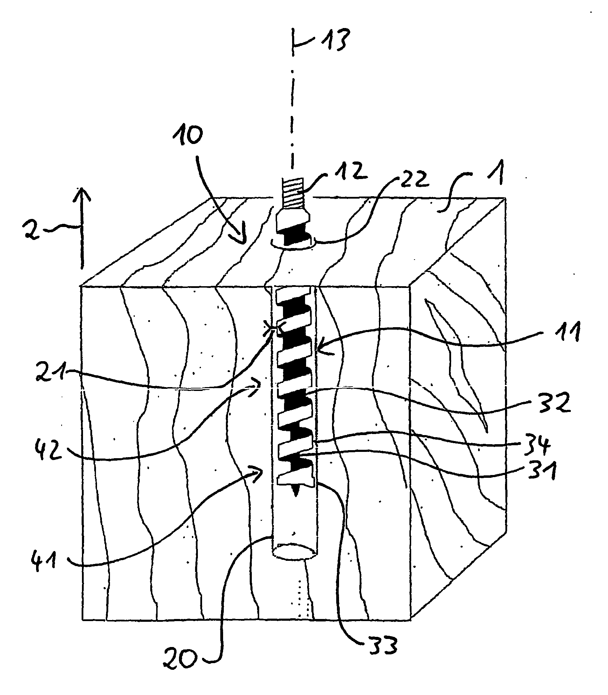

Die Erfindung wird nun mit Hilfe eines beispielhaften Ausführungsbeispiels anhand der Zeichnung näher beschrieben. Die einzige Zeichnung zeigt eine teilweise geschnittene perspektivische Ansicht eines Pfostens zusammen mit einem eingesetzten Pfostenanker.

Mit dem Bezugszeichen 1 ist ein Pfosten bezeichnet. Der Pfosten 1 ist aus Holz und weist einen quadratischen Querschnitt auf. Natürlich kann der Querschnitt auch anders ausgestaltet sein, zum Beispiel rund oder elliptisch, rechteckig oder polygonal. Das Material des Pfostens 1 kann auch aus einem anderen Material gewählt sein, sofern diese nur im untenstehenden Sinn zu Holz gleichartig sind. Das betrifft insbesondere Kunststoffmaterialien.

Der besagte Pfosten 1 verfügt über eine Längsachse, deren Ausrichtung hier durch den parallel zu dieser verlaufenden Pfeil 2 angezeigt ist. Der Pfosten 1 ist mit Hilfe eines erfindungsgemässen Pfostenankers oder kurz Ankers 10 an einer in der Figur nicht dargestellten Wand- oder Bodenfläche befestigbar. Die Figur zeigt einen Moment aus der Herstellung der Verbindung von Anker 10 und Pfosten 1, wenn der Anker 10 noch nicht vollständig im Pfosten 1 versenkt ist.

Der Anker 10 ist vorzugsweise einstückig aufgebaut und besteht dabei aus mindestens zwei unterschiedlichen Bereichen 11 und 12. Bei dem ersten Bereich 11 handelt es sich um einen Bohrer, wobei dieser Bereich 11 dafür vorgesehen ist, in den Pfosten 1 eingelassen zu werden. Der zweite Bereich 12 kann je nach Anwendung des Pfostenankers ausgestaltet sein, insbesondere kann es sich dabei um einen Gewindestangenabschnitt handeln. Dieser Gewindestangenabschnitt 12 ist entweder selbst oder über einen weiteren in der Zeichnung nicht dargestellten Abschnitt mit einem Antrieb, beispielsweise einer Bohrmaschine, formschlüssig verbindbar, um den Bohrer 11 in den Pfosten 1 hineintreiben zu können.

Die Figur zeigt in punktierter Form die Umrisse einer Bohrloches 20, in dem der Bohrerabschnitt 11 bereits über die Hälfte vorgeschoben worden ist. Die Schnitfläche kann in Gestalt eines sogenannten Schlangenbohrers vorliegen, mit dem aus dem Pfosten herausgeschnittene Späne herausgehoben werden können. Es ist auch jeder andere Bohrer einsatzbar, mit dem eine spannungsfreie Bohrung, insbesondere in Holz, erzeugbar ist, bei der kein radiales Spiel besteht. Unter radialem Spiel ist hier der Abstand 21 zwischen der Aussenseite des Bohrers 11 und der Innenwand der Bohrung 20 zu verstehen.

Der Bohrer 11 fördert Späne aus dem Bohrloch 20 heraus und schafft dabei in axialer Richtung, d.h. entlang der Längsachse 13 des Ankers 10 einen gewissen Freiraum, in den nach vollständigem Einführen des Bohrerabschnittes 11 durch die obere Öffnung 22 der Bohrung 20 ein Klebstoff einführbar ist. Insbesondere günstige Klebstoffe sind Klebstoffe auf Epoxyd-Harz-Basis beziehungsweise Polyurethane. Vor dem Einbringen des Klebstoffes kann der Anker 10 vorzugsweise eine achtel bis eine halbe Drehung zurückgedreht werden, um die Einführung des Klebstoffes zu vereinfachen. Er kann aber auch vollständig herausgezogen, der Klebstoff eingefüllt und der Bohrer wieder eingeführt werden.

Ein Bohrer nach dem Stand der Technik muss nur sein Eigengewicht tragen und Kräfte werden im wesentlichen in Longitudinalrichtung, also entlang der Achse 13, in ihn eingeleitet. Der Pfostenanker 10 wirkt heir als Lastenaufnahme. Dies gilt sowohl für den Gewindestangenteil 12 als auch für den Bohrerabschnitt 11. Daher ist der Bohrerabschnitt 11 nach der Erfindung in mindestens zwei Teilabschnitte, hier mit den Bezugszeichen 41 und 42 versehen. unterteilt. Die Teilabschnitte sind einstückig. Der Bohrkopf 11 verfügt über einen ersten Bohrkerndurchmesser oder Seele oder Bohrkernschaft 31, dem ein Mittelbereich 42 des Bohrers 11 folgt, der einen zweiten Bohrkerndurchmesser 32 aufweist, der grösser ist als der Durchmesser des ersten Bohrkerndurchmessers 31.

Der erste Bohrkerndurchmesser 31 liegt beispielsweise vorteilhafterweise zwischen einem Viertel und der Hälfte des Aussendurchmessers des Bohrers 11. Der zweite Bohrkerndurchmesser 32 liegt beispielsweise vorteilhafterweise zwischen der Hälfte und vier Fünftel des Aussendurchmessers des Bohrers 11. Damit ergibt sich zwischen den beiden Teilabaschnitten 41 und 42 eine Unstetigkeit im Durchmesser des Bohrschaftes 31 beziehungsweise 32. Das Verhältnis der axialen Länge der Bereiche 41 und 42 zueinander liegt beispielsweise zwischen 1:4 bis 1:1, vorzugsweise bei 1:2, um eine höhere Steifigkeit des Pfostenankers 10 zu erreichen, ohne das Ausbringen der Späne durch den grossen Bohrkerndurchmesser zu erschweren.

Anstelle der zwei Teilabschnitte 41 und 42 können auch drei Teilabschnitte vorgesehen sein, die beispielsweise einen ersten kleinsten Bohrkerndurchmesser von einem Viertel, einen zweiten mittleren Bohrkerndurchmesser von der Hälfte und einen dritten grössten Bohrkerndurchmesser von drei Viertel des Aussendurchmessers des Bohrers 11 aufweisen. Natürlich sind auch andere Übergänge und auch mehr Teilabschnitte möglich.

Die Gewindestange 12 verfügt über zwei unterschiedliche Elemente, die Gewindestange an sich und eine Bohrfutteraufnahme. Die Gewindestange 12 und die Bohrfutteraufnahme können hintereinander auf der Achse 13 angeordnet sein, es ist auch möglich, die Gewindestange 12 seitlich so auszugestalten, beispielsweise mit einer Nut, sodass sie gleichfalls eine Halteaufnahme bildet.

Schliesslich hat der Bohrkopf selber an einer Stelle 33 einen leicht grösseren Durchmesser als der Bohrschaft 34.

Mit dem erfindungsgemässen Bohrer ist ein axial richtiger Einbau gewährleistet, der eine gute Zentrierung des Ankers 10 in dem Pfosten 1 gestattet. Der Stand der Technik nach der DE 199 12 815 mit dem Dorn führt zu einer Verdrängung des Materials des Pfostens 1 und damit zu Spannungen in diesem. Der Bohrer 11 erzeugt eine spannungsfreie Bohrung in Holz und anderen vergleichbaren Materialien.

Die Länge des Ankers 10 ist abhängig von seinem Einsatzgebiet. Bei einem Pfosten 1 mit 5 bis 10 Zentimeter Durchmesser oder Querschnittmassen können übliche Längen bei einem Durchmesser des Bohrers 11 zwischen 6 und 10 Millimeter eine Gesamtlänge des Ankers 10 zwischen 10 und 70 Zentimeter aufweisen. Vorzugsweise ist diese Länge hälftig auf den Bohrerteil 11 und den Gewindestangenteil 12 aufgeteilt. Natürlich kann die Gewindestange 12 oder der Bohrer 11 auch gegenüber dem jeweils anderen Abschnitt kürzer oder länger sein. Es ist auch möglich, zwischen Bohrer 11 und Gewindestange 12 (oder einer flachen Stange ohne Gewinde) ein in der Zeichnung nicht dargestelltes Verbindungselement vorzusehen. Dies kann ein Aussensechskant sein oder eine radial zur Längsachse ausgerichtete Scheibe.

Mit dem Anker 10 gemäss dieser Erfindung ist eine einfache, sehr sichere, zentrierbare und axial richtig ausgerichtete Ankervorrichtung geschaffen, die vorab in einem Lager oder bei der Herstellung des Pfostens 1 in diesen eingetrieben wird. Alternativ kann der Pfostenanker 10 erst auf einer Baustelle in die dort vorgesehenen Pfosten 1 eingelassen.

Ein Pfostenanker 10 kann beispielsweise einen Durchmesser des Bohrerabschnittes 11 zwischen 5 und 18 Millimeter und eine Gesamtlänge des Pfostenankers 10 zwischen 10 und 100 Zentimeter aufweisen, wobei die besagte Länge vorzugsweise hälftig auf den Bohrerabschnitt 11 und den anderen Abschnitt 12 verteilt ist.

Der Schutzbereich soll durch die vorgängige Beschreibung, die ein beispielhaftes Ausführungsbeispiel zeigt, in keiner Weise beschränkt sein und sich nur aus den nachfolgenden Ansprüchen ergeben.

## Patentansprüche

1. Pfosten (1) mit einem mit diesem verbundenen Pfostenanker (10), der aus zwei endseitigen Abschnitten (11, 12) besteht, wobei der eine Abschnitt (11) in den Pfosten (1) ragt und der andere Abschnitt (12) zur Befestigung an oder in einem anderen Element vorgesehen ist, wobei der Pfosten über ein Bohrloch (20) verfügt, wobei der eine Abschnitt (11) ein Bohrerabschnitt (11) ist und wobei das Bohrloch (20) mit dem besagten Bohrerabschnitt (11) im wesentlichen kein radiales Spiel aufweist, so dass der in den Pfosten (1) eingebrachte Abschnitt (11) im wesentlichen spannungsfrei in dem Bohrloch (20) in dem Pfosten (1) ist, **dadurch gekennzeichnet, dass** der Bohrerabschnitt (11) in seiner Längsrichtung (13) in einem ersten Bereich (41), angrenzend an seine Spitze, über einen ersten zylindrischen Bohrkern (31), der einen ersten kleineren Durchmesser aufweist, und in einem zweiten Bereich (42), näher zu dem anderen Abschnitt (12) gelegen, über einen zweiten zylindrischen Bohrkern (32)*,* der einen zweiten grösseren Durchmesser aufweist, verfügt.

2. Pfosten (1) nach Anspruch 1, **dadurch gekennzeichnet, dass** mindestens teilweise in dem Freiraum zwischen Bohrerabschnitt (11) und Bohrloch (20) in radialer und/oder in axialer Richtung Klebstoff ist.

3. Pfosten (1) nach Anspruch 1 oder 2, **dadurch gekennzeichnet, dass** der Bohrerabschnitt in allen Bereichen (31, 32) ein Schlangenbohrer (11) ist.

4. Pfosten (1) nach einem der Ansprüche 1 bis 3, **dadurch gekennzeichnet, dass** der Pfostenanker (10) einstückig ausgestaltet ist, dass der andere Abschnitt (12) eine Gewindestange ist, und/oder dass die beiden Abschnitte (11 und 12) aneinanderstossen.

5. Pfosten (1) nach einem der Ansprüche 1 bis 4, **dadurch gekennzeichnet dass** die Bohrung (20) im Pfosten (1) zentral ausgeführt ist.

6. Pfosten nach einem der Ansprüche 1 bis 5, **dadurch gekennzeichnet, dass** der Pfosten (1) aus Holz oder aus Kunststoffmaterialien ist und vorzugsweise einen quadratischen, elliptischen, rechteckigen oder polygonalen Querschnitt aufweist.

7. Pfostenanker (10), bestehend aus zwei endseitigen Abschnitten (11, 12), wobei der eine Abschnitt (11) in einen Pfosten (1) einbringbar ist und der andere Abschnitt (12) zur Befestigung an oder in einem anderen Element vorgesehen ist, wobei der in den Pfosten einbringbare Abschnitt (11) ein Bohrerabschnitt (11) zur im wesentlichen spannungsfreien Einbringung eines Bohrloches (20) in den Pfosten (1) ist, welches Bohrloch (20) mit dem besagten Bohrerabschnitt (11) im wesentlichen kein radiales Spiel aufweist, **dadurch gekennzeichnet, dass** der Bohrerabschnitt (11) in seiner Längsrichtung (13) in einem ersten Bereich (41), angrenzend an seine Spitze, über einen ersten zylindrischen Bohrkern (31) der einen ersten Kleineren Durchmesser aufweist, und in einem zweiten Bereich (42), näher zu dem anderen Abschnitt (12) gelegen, über einen zweiten zylindrischen Bohrkern (32), der einen zweiten grösseren Durchmesser aufweist, verfügt.

8. Pfostenanker (10) nach Anspruch 7, **dadurch gekennzeichnet, dass** das Verhältnis der axialen Länge des ersten Bereiches (41) mit einem ersten Bohrkerndurchmesser (31) zu dem Bereich (42) mit einem zweiten Bohrkerndurchmesser (32) zwischen 1:3 und 1:1 beträgt und/oder dass der erste Bohrkerndurchmesser (31) zwischen einem Viertel und der Hälfte des Aussendurchmessers des Bohrers (11) und der zweite Bohrkerndurchmesser (32) zwischen der Hälfte und vier Fünftel des Aussendurchmessers des Bohrers (11) liegt.

9. Verfahren zur Einbringung eines Pfostenankers (10) nach Anspruch 7 oder 8 in einen Pfosten (1) nach einem der Ansprüche 1 bis 6, **dadurch gekennzeichnet, dass** es die Schritte umfasst,
- Bohren eines Bohrloches (20) in dem Pfosten (1) mit dem Bohrerabschnitt (11) des Pfostenankers (10),
- Einbringen von Klebstoff in das Bohrloch (20) bei eingesetztem Bohrerabschnitt (11) zur Verfüllung eines verbleibenden radialen und des axialen Spiels des Bohrerabschnittes (11) im Bohrloch (20) oder alternativ Herausziehen des Bohrerabschnittes (11), Einbringen von Klebstoff in das Bohrloch (20) und erneutes Einführen des Bohrerabschnittes (11) in das mindestens teilweise klebstoffgefüllte Bohrloch (20).

10. Verfahren nach Anspruch 9, **dadurch gekennzeichnet, dass** vor dem Einbringen des Klebstoffes der Pfostenanker (10) eine achtel bis eine halbe Drehung zurückgedreht wird.

## Claims

1. A post (1) having a post anchor (10) connected with said post and comprising two end sections (11, 12), where one section (11) extends into the post (1) and the other section (12) is intended for fastening on or in another element, wherein the post (1) comprises a drillhole (20), wherein one section (11) is a drill bit section (11) and wherein the drillhole (20) has substantially no radial play with said drill bit section (11) for arranging the section (11) introduced in the post (1) in the drillhole (20) in the post (1) in a substantially stress-free manner, **characterized in that** the drill bit section (11) having in a first segment (41), in the longitudinal direction (13) adjacent to its tip, a first cylindrical drilling core (31), having a first smaller diameter, and having in a second segment (42), arranged nearer to the other section (12), a second drilling core (32), having a second larger diameter.

2. The post (1) as claimed in claim 1, **characterized in that** an adhesive is in the free space between the drill bit section (11) and the drill hole (20) in radial and/or axial direction.

3. The post (1) as claimed in claim 1 or 2, **characterized in that** the drill bit is an auger bit (11) in all its segments (31, 32).

4. The post (1) as claimed in one of claims 1 to 3, **characterized in that** it is designed in one piece and **in that** the other section (12) is a threaded rod and/or **in that** the two sections (11 and 12) abut.

5. The post (1) as claimed in one of claims 1 to 4, **characterized in that** the bore (20) is made centrally in the post.

6. The post (1) as claimed in one of claims 1 to 5, **characterized in that** the post (1) is made of wood or of plastic materials and preferably has a square, elliptical, rectangular or polygonal cross section.

7. A post anchor (1) comprising two end sections (11, 12), where one section (11) can be introduced into a post (10) and the other section (12) is intended for fastening on or in another element, wherein the section (11) which can be introduced into the post is a drill bit section (11) for making a drillhole (20) in the post (10) in a substantially stress-free manner, which drillhole (20) has substantially no radial play with said drill bit section (11), **characterized in that** the drill bit section (11) has in a first segment (41), in the longitudinal direction adjacent to its tip, a first drilling core (31), having a first smaller diameter, and in a second segment (42), arranged nearer to the other section (12), a second cylindrical drilling core (32), having a second larger diameter.

8. The post anchor (10) according to claim 7, **characterized in that** the ratio between the axial length of the first area (41) having the first drilling core diameter (31) to the area (42) having the second drilling core diameter (32) is between 1:3 and 1:1 and/or **in that** the first drilling core diameter (31) is set between one fourth to one half of the external diameter of the drill bit (11) and the second drilling core diameter (32) is set between one half and 4/5 of the external diameter of the drill bit (11).

9. A method of introducing a post anchor (10) as claimed in one of the preceding claims 7 or 8 into a post (1) according to one of claims 1 to 6, **characterized in that** it comprises the following steps:
- drilling a drillhole (20) in the post (1) with the drill bit section (11) of the post anchor (10),
- introducing adhesive into the drillhole (20) with the drill bit section (11) inserted so as to take up, by filling, any remaining radial play and the axial play of the drill bit section (11) in the drillhole (20), or, alternatively, withdrawing the drill bit section (11), introducing adhesive into the drillhole (20) and reinserting the drill bit section (11) into the at least partially adhesive-filled drillhole (20).

10. The method as claimed in claim 9, **characterized in that**, prior to introducing the adhesive, the post anchor (10) is rotated back by an eighth to a half of a rotation.

## Revendications

1. Bloc support (1) doté d'une tige d'ancrage (10) de bloc support connectée avec ledit bloc support et comprenant deux segments finaux (11, 12), où un segment (11) s'étend dans le bloc support (1) et l'autre segment (12) est prévu pour être fixé à ou dans l'autre élément, où le bloc support comprend un trou percé (20), où un segment (11) est un segment de foret (11), où le trou percé (20) n'a essentiellement pas de jeu radial avec ledit segment de foret (11) pour arranger le segment (11) introduit dans le bloc support (1) dans le trou percé (20) dans le bloc support d'une manière essentiellement sans tension, **caractérisé en ce que** le segment de foret (11) comprend dans un premier segment (41) dans sa direction longitudinale (13) adjacent à sa pointe un premier noyau de foret cylindrique (31), ayant un premier diamètre plus petit, et dans un deuxième segment (42), arrangé plus proche de l'autre segment (12), un deuxième noyau de foret (32) cylindrique, ayant un deuxième diamètre plus large.

2. Bloc support (1) selon la revendication 1, **caractérisé en ce qu'**un adhésif est dans l'espace libre entre le segment de foret (11) et le trou percé (20) dans sa direction radiale et/ou axiale.

3. Bloc support (1) selon la revendication 1 ou 2, **caractérisé en ce que** le segment de foret est une mèche a bois (11) dans tous les segments (31, 32).

4. Bloc support (1) selon l'une de revendications 1 à 3, **caractérisé en ce que** la tige d'ancrage (10) est en une seule pièce, **en ce que** l'autre segment (12) est une tige filetée et/ou **en ce que** les deux segments (11 et 12) ce touchent mutuellement.

5. Bloc support (1) selon l'une de revendications 1 à 4, **caractérisé en ce que** le trou percé (20) est exécuté d'une manière centrale dans le bloc support (1).

6. Bloc support (1) selon l'une de revendications 1 à 5, **caractérisé en ce que** le bloc support (1) est en bois ou en matériau plastique et qu'il comporte préférablement une section carrée, elliptique, rectangulaire ou polygonale.

7. Tige d'ancrage (10) consistante de deux segments finaux (11, 12), ou l'un segment (11) peut être introduit dans un bloc support (1) et où l'autre segment (12) est prévu pour être fixé à ou dans un autre élément, où le segment (11) prévu a être introduit dans le bloc support est un segment de foret (11) pour arranger le segment (11) dans le trou percé (20) dans le bloc support (1) d'une manière essentiellement sans tension, **caractérisée en ce que** le segment de foret (11) comprend dans un premier segment (41) dans sa direction longitudinale (13) adjacent à sa pointe un première noyau de foret cylindrique (31) ayant un premier diamètre plus petit, est dans un deuxième segment (42), arrange plus proche de l'autre segment (12), un deuxième noyau de foret (32) cylindrique ayant un deuxième diamètre plus large.

8. Tige d'ancrage (10) selon la revendication 7, **caractérisée en ce que** le rapport de la longueur axiale dans le premier segment (41) avec un premier diamètre du noyau de foret (31) par rapport au segment (42) avec un deuxième diamètre du noyau de foret (32) est entre 1:3 et 1:1 et/ou **en ce que** le premier diamètre de noyau de foret (31) est entre un quart et la moitie du diamètre extérieur du foret (11) et le deuxième diamètre du noyau de foret (32) est entre la moitie et quatre cinquièmes du diamètre extérieur du foret (11).

9. Procédé pour introduire une tige d'ancrage (10) selon la revendication 7 ou 8 dans un bloc support (1) selon l'une des revendications 1 à 6, **caractérisé en ce qu'**il comporte les étapes,
- percer un trou percé (20) dans un bloc support (1) avec un segment de foret (11) de la tige d'ancrage (10)
- introduire de l'adhésif dans le trou percé (20) avec le segment de foret (11) introduit pour remplir le jeux radial et axial restant du segment de foret (11) dans le trou percé (20) ou d'une manière alternative, retirer le segment de foret (11), introduire de l'adhésif dans le trou percé (20) et introduire de nouveau le segment de foret (11) dans le trou percé (20) qui est au moins partiellement rempli d'adhésif.

10. Procédé selon la revendication 9, **caractérisé en ce que** la tige d'ancrage (10) est tournée un huitième jusqu'à une demi-rotation en arrière avant l'introduction de l'adhésif.
